Europäisches Patentamt

European Patent Office

Office européen des brevets

(11) Veröffentlichungsnummer: **0 123 085**
**B1**

(12) **EUROPÄISCHE PATENTSCHRIFT**

(45) Veröffentlichungstag der Patentschrift:
**13.07.88**

(51) Int. Cl.⁴: **H 02 M 3/155**

(21) Anmeldenummer: **84102537.2**

(22) Anmeldetag: **09.03.84**

(54) Elektronisches Schaltnetzteil mit einem Drosselwandler.

(30) Priorität: **24.03.83 DE 3310678**

(43) Veröffentlichungstag der Anmeldung:
**31.10.84 Patentblatt 84/44**

(45) Bekanntmachung des Hinweises auf die Patenterteilung:
**13.07.88 Patentblatt 88/28**

(84) Benannte Vertragsstaaten:
**AT BE CH DE FR GB IT LI LU NL SE**

(56) Entgegenhaltungen:
**EP - A - 0 030 276**
**DE - A - 2 532 045**
**DE - B - 1 203 863**
**FR - A - 2 324 151**

(73) Patentinhaber: **Braun Aktiengesellschaft,**
**Rüsselsheimer Strasse 22, D-6000 Frankfurt/Main (DE)**

(72) Erfinder: **Schwarz, Gerhard, Eggestrasse 16,**
**D-5990 Altena (DE)**

(74) Vertreter: **Einsele, Rolf, Braun Aktiengesellschaft**
**Postfach 1120 Frankfurter Strasse 145, D-6242 Kronberg**
**Taunus (DE)**

## Beschreibung

Die Erfindung bezieht sich auf eine Schaltung zur Regelung der Ausgangsspannung eines elektronischen Schaltnetzteiles zur Stromversorgung eines zu einem lastseitigen Kondensator parallel geschalteten elektrischen Verbrauchers aus einer Gleichspannungsquelle unterschiedlicher Spannungshöhe mit einem Drosselwandler mit in Reihe zu einer Drossel geschalteter Schaltstrecke eines Schalttransistors.

Elektronische Schaltnetzteile dienen zur Konstantspannungs- und/oder Konstantstromversorgung elektrischer oder elektronischer Geräte und sind als Drosselwandler, primär oder sekundär getaktete Sperr- oder Durchlasswandler bzw. als Gegentaktwandler aufgebaut. Sie weisen in der Regel eine Gleichrichterschaltung mit nachgeschalteter Sieb- und Glättungsanordnung auf, an die ein Übertrager oder eine Drossel angeschlossen ist. Dabei ist im Falle eines Drosselwandlers in Reihe zur Drossel und zum elektrischen Verbraucher ein elektronischer Schalter bzw. Schalttransistor vorgesehen, der in Abhängigkeit von einer oder mehreren Regelgrössen ein- und ausgeschaltet wird, wobei die in der Drossel gespeicherte Energie in der Sperrphase des elektronischen Schalters über eine entsprechend gepolte Diode an den elektrischen Verbraucher abgegeben wird.

Aus der DE-B 1 203 863 ist eine Gleichstromversorgungsanlage mit Zweipunkt-Spannungsregelung bekannt, bei der parallel zur Eingangsgleichspannungsquelle die Reihenschaltung der Primärwicklung eines Transformators, der Kollektor-Emitter-Schaltstrecke eines Schalttransistors, eines Widerstandes und eines Kondensators vorgesehen ist. Der Widerstand ist dabei Teil einer der Strombegrenzung dienenden Schaltung, die zusätzlich parallel zum Widerstand die Reihenschaltung zweier Spannungsteilerwiderstände, eine Zenerdiode und der Basis-Emitter-Strecke eines zusätzlichen Schalttransistors mit parallel geschaltetem weiteren Widerstand aufweist. Die mit entgegengesetztem Wickelsinn gewickelte Sekundärwicklung des Transformators dient der Abgabe der Transformatorenenergie in den Schaltpausen des Schalttransistors und ist mit ihrem einen Ende in Reihe mit einem Gleichrichter an die zu dem Schalttransistor führende Kondensatorklemme und mit ihrem anderen Ende unmittelbar an die andere Kondensatorklemme angeschlossen. Mit der Sekundärwicklung des Transformators ist ein Rückkopplungskreis aufgebaut, der dafür sorgt, dass wahlweise der Schalttransistor bzw. der zusätzliche Schalttransistor von einem Übersteuerungsbereich in einen aktiven Bereich umschwingt. Dadurch wird ein sofortiges Abschalten des Schalttransistors bewirkt, sobald er nicht mehr übersteuert ist.

Der Einschaltvorgang des Schalttransistors wird durch den nicht übersteuerten Zustand des zusätzlichen Schalttransistors eingeleitet und durch eine spezielle Dimensionierungsvorschrift unterstützt. Selbst bei optimaler Bemessung der einzelnen, das Ein- und Ausschaltverhalten des Schalttransistors bestimmenden Widerstände und Wicklungen des Transformators ist ein schlagartiges Einschalten des Schalttransistors nicht oder nicht in jedem Falle zu erzielen. Dies kann dazu führen, dass unter ungünstigen Bedingungen, zum Beispiel bei starker Belastung, ein Anschwingen des bekannten Drosselwandlers nicht gewährleistet ist.

Aufgabe der Erfindung ist es, einen mit einem Schalttransistor versehenen Drosselwandler zu schaffen, der ein schlagartiges Leitendwerden des Schalttransistors und damit ein Anschwingen des Drosselwandlers auch unter ungünstigen Bedingungen, wie beispielsweise bei hoher Belastung des Drosselwandlers, gewährleistet.

Die Lösung dieser Aufgabe erfolgt durch eine Schaltung der eingangs genannten Art, bei der in der Leitphase des Schalttransistors die Drossel mit einem ansteigenden Strom aufgeladen wird und in der Sperrphase des Schalttransistors die in der Drossel gespeicherte Energie über eine Diode in den lastseitigen Kondensator fliesst, der über den elektrischen Verbraucher entladen wird, mit einem in Reihe zum Schalttransistor geschalteten Emitter-Widerstand, parallel zu dem die Reihenschaltung einer ersten Zenerdiode mit der Basis-Emitter-Strecke eines zweiten Transistors geschaltet ist, dessen Kollektor mit der Basis des Schalttransistors verbunden ist und mit einer mit der Drossel magnetisch gekoppelten Rückkopplungswicklung, wobei die Rückkopplungswicklung über die Reihenschaltung eines Widerstands und eines Kondensators einerseits an die Basis des Schalttransistors und andererseits an die Verbindung der Drossel mit dem Emitter-Widerstand angeschlossen ist, und der Emitter des zweiten Transistors über einen Kondensator sowohl mit der Kathode einer Diode verbunden ist, deren Anode an die Verbindung der Drossel mit dem lastseitigen Kondensator und dem elektrischen Verbraucher angeschlossen ist, als auch über einen Widerstand mit der Basis des Schalttransistors sowie über ein der Ausgangsspannung entsprechendes Referenzelement mit der Basis des zweiten Transistors verbunden ist.

Aus der Literaturstelle Jan-Hendrik Jansen: «Transistor-Handbuch», Franzis-Verlag, 1980, Seiten 347 bis 354 ist ein elektronisches Schaltnetzteil mit einem Drosselwandler bekannt, bei dem eine Eingangs-Wechselspannung an einen Netzgleichrichter angelegt wird, die anschliessend gesiebt und geglättet wird, bevor sie an einen Schalttransistor gelegt wird. Hinter dem Schalttransistor ist eine Drossel angeordnet, an die ausgangsseitig eine Last mit parallelgeschaltetem Kondensator angeschlossen ist. An die Last bzw. den Kondensator einerseits und kathodenseitig an die Verbindung des Schalttransistors mit der Drossel andererseits ist eine Diode angeschlossen. An der Last wird mittels einer Messschaltung gemessen, um wieviel die durch die Schaltzeiten des Schalttransistors bestimmte Ausgangsspannung von einer der Messschaltung eingegebenen Referenzspannung abweicht. Abweichungen werden einem Im-

pulsgenerator übertragen, der die Breite der Steuerimpulse entsprechend einstellt. Über eine Steuerschaltung wird der Impuls an den Schalttransistor übertragen.

Zum netzunabhängigen Betrieb eines elektrischen Gerätes wie beispielsweise eines elektrischen Trockenrasierapparates, eines Elektronenblitzgerätes, eines Rundfunk- oder Fernsehgerätes o.dgl. weisen die elektrischen Geräte einen Akkumulator auf, bei dem zur Ladung des Akkumulators mit konstantem Strom eine Regelschaltung vorgesehen werden muss, die auch bei unterschiedlichen Eingangsspannungen im Bereich von beispielsweise 90 bis 240 V einen konstanten Ausgangsstrom zur Ladung des Akkumulators gewährleistet. Dies ist insbesondere dann erforderlich, wenn es sich um sogenannte Nickel-Kadmium-Akkumulatoren handelt, deren Ladestrom nur in einem sehr kleinen Bereich schwanken darf, da ansonsten eine Zerstörung der teuren Nickel-Kadmium-Zellen befürchtet werden muss. Darüber hinaus ist es erwünscht, das betreffende elektrische Gerät an unterschiedlichen Netzspannungen und -frequenzen anzuschliessen, ohne eine Umschaltung vornehmen zu müssen, die ohnehin häufig vergessen wird, so dass das betreffende elektrische Gerät gefährdet ist.

Die an die Basis des Schalttransistors geführte Rückkopplungsanordnung, die aus der Serienschaltung einer Rückkopplungswicklung, eines Kondensators und eines Widerstands besteht, ist an sich bekannt, wie beispielsweise aus der EP-A1-30 276, wo die den Verbraucher speisende Sekundärwicklung eines Sperrwandlers auch als Rückkopplungswicklung ausgebildet ist, deren eines Ende über die Reihenschaltung eines Widerstandes und eines Kondensators an die Basis des Schalttransistors geführt ist.

Die erfindungsgemässe Schaltung benötigt lediglich eine einfach aufgebaute Spannungsregelschaltung, die nur handelsübliche Bauelemente verwendet. Die Schaltung liefert auch bei Eingangsspannungen zwischen 70 und 264 V eine konstante Ausgangsspannung und schwingt auch unter Belastung sicher an. Das schlagartige Einschalten des Schalttransistors, auch unter ungünstigen Betriebsbedingungen, gewährleistet geringe Einschaltverluste.

Eine vorteilhafte Ausgestaltung der erfindungsgemässen Lösung ist dadurch gekennzeichnet, dass parallel zur Basis-Emitter-Strecke des zweiten Transistors ein weiterer Widerstand geschaltet ist.

Bei einer weiteren vorteilhaften Ausgestaltung besteht das der Ausgangsspannung entsprechende Referenzelement aus einer zweiten Zenerdiode mit einem in Serie geschalteten Widerstand.

Als Gleichspannungsquelle kann auch ein an ein Wechselspannungsnetz beliebiger Frequenz angeschlossener Gleichrichter dienen.

Anhand eines in der Zeichnung dargestellten Ausführungsbeispiels soll der der Erfindung zugrundeliegende Gedanke näher erläutert werden. Es zeigen:

Fig. 1 ein elektronisches Schaltnetzteil mit einem Drosselwandler mit einer Längsdrossel und

Fig. 2 ein elektronisches Schaltnetzteil mit einem Drosselwandler mit einer Querdrossel.

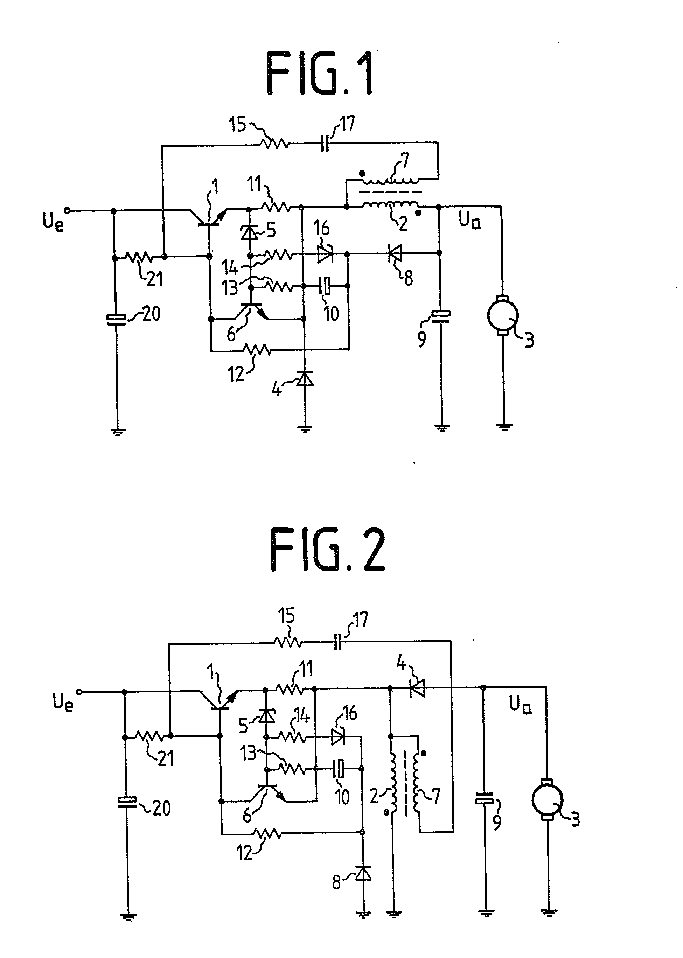

Das in Fig. 1 dargestellte elektronische Schaltnetzteil weist einen Drosselwandler mit einer Längsdrossel auf, der aus einem Schalttransistor 1 mit in Reihe zu seiner Schaltstrecke geschalteter Drossel 2 sowie einem parallel zum an die Drossel angeschlossenen elektrischen Verbraucher 3 geschalteten ersten Kondensator 9 und einer an die Verbindung der Schaltstrecke des Schalttransistors 1 mit der Drossel 2 einerseits und anodenseitig an den elektrischen Verbraucher 3 bzw. den ersten Kondensator 9 andererseits angeschlossener erster Diode 4 besteht. Der Schalttransistor 1 ist kollektorseitig an eine Eingangs-Gleichspannung $U_e$ angeschlossen, die über einen Eingangskondensator 20 geglättet wird. Die Eingangs-Gleichspannung kann wahlweise an einem Gleichspannungsnetz oder über einen Gleichrichter, vorzugsweise eine Gleichrichter-Brückenschaltung, aus einem Wechselspannungsnetz gewonnen werden.

Parallel zur Basis-Kollektor-Strecke des Schalttransistors 1 ist ein Eingangswiderstand 21 angeschlossen.

Die eigentliche Regelschaltung besteht aus einem in die Verbindung des Emitters des Schalttransistors 1 mit der Drossel 2 geschalteten ersten Widerstand 11, zu dem die Reihenschaltung der Basis-Emitter-Strecke eines zweiten Transistors 6 und einer ersten Zenerdiode 5 mit kathodenseitigem Anschluss an den Emitter des Schalttransistors 1 parallel geschaltet ist. Der Kollektor des zweiten Transistors 6 ist sowohl mit der Basis des Schalttransistors 1 als auch mit einem zweiten Widerstand 12 verbunden, der über einen zweiten Kondensator 10 mit dem Emitter des zweiten Transistors 6 bzw. über die Reihenschaltung einer zweiten Zenerdiode 16 und eines vierten Widerstandes 14 mit der Basis des zweiten Transistors 6 verbunden ist. Dabei ist die Kathode der zweiten Zenerdiode 16 an den zweiten Widerstand 12 angeschlossen und mit der Kathode einer zweiten Diode 8 verbunden, deren Anode an die Verbindung der Drossel 2 mit dem elektrischen Verbraucher 3 bzw. dem ersten Kondensator 9 angeschlossen ist.

Parallel zur Basis-Emitter-Strecke des zweiten Transistors 6 ist ein dritter Widerstand 13 vorgesehen.

Die Basis des Schalttransistors 1 ist über einen fünften Widerstand 15 und einen dritten Kondensator 17 mit dem einen Wicklungsende einer Rückkopplungswicklung 7 verbunden, deren anderes Wicklungsende an die Verbindung des ersten Widerstandes 11 mit der Drossel 2 angeschlossen ist.

Im Betrieb des elektronischen Schaltnetzteiles mit einem Drosselwandler mit Längsdrossel gemäss Fig. 1 liegt an dem elektrischen Verbraucher 3 bzw. dem ersten Kondensator 9 eine durch die Schaltzeiten und Pausenzeiten des Schalttransi-

stors bestimmte geregelte Ausgangsspannung $U_a$ an.

Das in Fig. 2 dargestellte elektronische Schaltnetzteil mit einem Drosselwandler mit Querdrossel entspricht weitestgehend dem in Figur dargestellten Drosselwandler mit Längsdrossel, so dass gleiche Bauelemente mit gleichen Bezugsziffer bezeichnet sind. Durch die Anordnung der Drossel 2 bedingt, ist lediglich die Anordnung der ersten und zweiten Diode 4 bzw. 8 gegenüber der Anordnung gemäss Fig. 1 verändert, wobei die erste Diode 4 kathodenseitig mit dem ersten Widerstand 11 und anodenseitig mit dem elektrischen Verbraucher 3 bzw. dem parallel zum elektrischen Verbraucher 3 geschalteten Kondensator 9 verbunden ist, während die zweite Diode 8 kathodenseitig an die Verbindung des zweiten Widerstandes 12 mit dem zweiten Kondensator 10 bzw. der Kathode der zweiten Zenerdiode 16 und anodenseitig an den elektrischen Verbraucher 3 bzw. den ersten Kondensator 9 angeschlossen ist.

Nachstehend soll die Funktionsweise der elektronischen Schaltnetzteile gemäss den Figuren 1 und 2 mit Längs- bzw. Querdrossel näher erläutert werden.

Wird an den Eingangskondensator 20 eine Gleichspannung mit positivem Anschluss an den Kollektor des Schalttransistors 1 angelegt, so fliesst über den Eingangswiderstand 21 ein geringer Basisstrom, der zur Ansteuerung des Schalttransistors 1 führt. Der dadurch bedingte Emitterstrom fliesst über die Drossel 2 bzw. in der Rückkopplungswicklung 7 wird eine Spannung induziert und bewirkt ein Aufladen des dritten Kondensators 17, so dass infolge dieser Rückkopplung über den dritten Kondensator 17 und den fünften Widerstand 15 der Schalttransistor 1 schlagartig leitend und bis in die Sättigung durchgesteuert wird. Wenn der linear ansteigende Kollektor- bzw. Emitterstrom des Schalttransistors 1 am ersten Widerstand 11 einen Spannungsabfall hervorruft, der grösser ist als die Summe der Durchbruchspannung der ersten Zenerdiode 5 und der Basis-Emitter-Sperrspannung des gesperrten zweiten Transistors 6, so wird der zweite Transistor 6 leitend und der Schalttransistor 1 gesperrt. Damit ist die Flussphase beendet und es beginnt die Sperrphase, in der die erste Diode 4 leitend wird und die in der Drossel 2 gespeicherte Energie in den ersten Kondensator 9 bzw. in die Last 3 fliesst. In der Sperrphase wird die zweite Diode 8 ebenfalls leitend und der zweite Kondensator 10 auf die Ausgangsspannung $U_a$ aufgeladen. Wenn die Ausgangsspannung $U_a$ und damit die Spannung am zweiten Kondensator 10 grösser ist als

$$U_{c2} > U_{BE} \cdot \frac{R_{14}}{R_{13}} + U_{z16}$$

wobei $U_{c2}$ die Spannung am zweiten Kondensator 10, $U_{BE}$ der Basis-Emitter-Spannungsabfall am zweiten Transistor 6, $R_{13}$ und $R_{14}$ der Widerstandswert des dritten bzw. vierten Widerstandes und $U_{z16}$ die Zenerspannung der zweiten Zenerdiode 16 ist, so wird der zweite Transistor 6 leitend und verbleibt in diesem Zustand über das Ende der Sperrphase hinaus, und zwar solange, bis die Spannung am zweiten Kondensator

$$U_{c2} > U_{BE} \cdot \frac{R_{14}}{R_{13}} + U_{z16}$$

geworden ist. Der durch den zweiten Widerstand 12 fliessende Strom fliesst dabei in den zweiten Transistor 6. Wenn die Spannung am zweiten Kondensator 10 unter den in der obenstehenden Gleichung genannten Wert abgesunken ist, so wird der zweite Transistor 6 gesperrt, so dass der durch den zweiten Widerstand 12 fliessende Strom den dritten Kondensator 17 soweit auflädt, dass der Schalttransistor 1 zu leiten beginnt. Infolge der Rückkopplung über den dritten Kondensator 17 und den fünften Widerstand 15 wird der Schalttransistor 1 schlagartig leitend und in der Leitphase bis in die Sättigung durchgesteuert. Erst wenn sein linear ansteigender Kollektorbzw. Emitterstrom am ersten Widerstand 11 den obenbezeichneten Spannungsabfall hervorruft, wird der zweite Transistor 6 erneut leitend und die Flussphase beendet, so dass eine erneute Sperrphase beginnt.

Wie aus der vorstehenden Beschreibung der Funktion des erfindungsgemässen Schaltnetzteiles hervorgeht, ist auch bei starker Belastung des Schaltnetzteiles ein Anschwingen des Drosselwandlers sichergestellt, wozu im wesentlichen der Widerstand 12, der den dritten Kondensator 17 auflädt, der an die Basis des Schalttransistors 1 angeschlossen ist, beiträgt. Die eigentliche Regelschaltung besteht aus handelsüblichen Bauelementen und kann somit in einfacher und billiger Weise aufgebaut werden. Die Schaltungsanordnung stellt darüber hinaus sicher, dass auch bei sehr stark schwankenden Eingangsspannungen eine konstante Ausgangsspannung gewährleistet ist, deren Wert im wesentlichen von der Dimensionierung der zweiten Zenerdiode 16 sowie der Widerstände 13 und 14 abhängt.

**Patentansprüche**

1. Schaltung zur Regelung der Ausgangsspannung eines elektronischen Schaltnetzteils zur Stromversorgung eines zu einem lastseitigen Kondensator (9) parallel geschalteten elektrischen Verbrauchers (3) aus einer Gleichspannungsquelle unterschiedlicher Spannungshöhe mit einem Drosselwandler mit in Reihe zu einer Drossel (2) geschalteter Schaltstrecke eines Schalttransistors (1), in dessen Leitphase die Drossel (2) mit einem ansteigenden Strom aufgeladen wird und in dessen Sperrphase die in der Drossel (2) gespeicherte Energie über eine Diode (4) in den lastseitigen Kondensator fliesst, der über den elektrischen Verbraucher (3) entladen wird, mit einem in Reihe zum Schalttransistor (1) geschalteten Emitter-Widerstand (11), parallel zu dem die Reihenschaltung einer ersten Zenerdiode (5) mit der Basis-Emitter-Strecke eines zweiten Transistors (6) geschaltet ist, dessen Kollektor mit der Basis des Schalttransistors (1) verbunden ist und mit einer mit der Drossel (2) magnetisch gekoppelten Rückkopplungswicklung (7), wobei die Rückkopplungswicklung (7) über die Reihenschaltung eines Widerstands (15) und eines Kondensators (17) einerseits an die Basis des Schalttransistors (1) und andererseits an die Verbindung der Drossel (2) mit dem Emitter-Widerstand (11) angeschlossen ist, und der Emitter des zweiten Transistors (6) über einen Kondensator (10) sowohl mit der Kathode einer Diode (8) verbunden ist, deren Anode an die Verbindung der Drossel (2) mit dem lastseitigen Kondensator (9) und dem elektrischen Verbraucher (3) angeschlossen ist, als auch über einen Widerstand (12) mit der Basis des Schalttransistors (1) sowie über ein der Ausgangsspannung entsprechendes Referenzelement mit der Basis des zweiten Transistors (6) verbunden ist.

2. Schaltung nach Anspruch 1, dadurch gekennzeichnet, dass parallel zur Basis-Emitter-Strecke des zweiten Transistors (6) ein weiterer Widerstand (13) geschaltet ist.

3. Schaltung nach Anspruch 1, dadurch gekennzeichnet, dass das der Ausgangsspannung entsprechende Referenzelement eine zweite Zenerdiode (16) mit einem in Serie geschalteten Widerstand (14) ist.

4. Schaltung nach Anspruch 1 oder 2, dadurch gekennzeichnet, dass als Gleichspannungsquelle ein an ein Wechselspannungsnetz angeschlossener Gleichrichter dient.

## Claims

1. A circuitry for regulating the output voltage of an electronic switching power supply supplying power to an electrical load (3) connected in parallel with a load-side capacitor (9) from a DC voltage source of varying voltage level, including a choke converter having the circuit of a switching transistor (1) connected in series with a choke (2), with the choke (2) being charged with a rising current in the conductive state of the switching transistor while in its off-state the energy stored in the choke (2) flows via a diode (4) to the load-side capacitor which is discharged via the electrical load (3), with an emitter resistor (11) which is connected in series with the switching transistor (1) and in parallel with the series arrangement comprising a first Zener diode (5) and the base-emitter circuit of a second transistor (6) whose collector is connected to the base of the switching transistor (1), and with a feedback winding (7) magnetically coupled to the choke (2), wherein the feed-back winding (7) has its one end connected to the base of the switching transistor (1) via a resistor (15) and a capacitor (17) connected in series and its other end to the junction of the choke (2) and the emitter resistor (11), and wherein the emitter of the second transistor (6) is connected via a capacitor (10) both to the cathode of a diode (8) having its anode connected to the junction of the choke (2) and the load-side capacitor (9) and the electrical load (3), and, via a resistor (12), to the base of the switching transistor (1) and via a reference element corresponding to the output voltage to the base of the second transistor (6).

2. A circuitry as claimed in claim 1, characterized in that a further resistor (13) is connected in parallel with the base-emitter circuit of the second transistor (6).

3. A circuitry as claimed in claim 1, characterized in that the reference element corresponding to the output voltage is a second Zener diode (16) with a resistor (14) connected in series.

4. A circuitry as claimed in claim 1 or claim 2, characterized in that the DC voltage source is a rectifier connected to an AC voltage line.

## Revendications

1. Circuit destiné au réglage de la tension de sortie d'un bloc à alimentation à commutation électronique prévu pour l'alimentation en courant d'un consommateur électrique (3), monté en parallèle avec un condensateur (9) côté charge, à partir d'une source de tension continue de voltage différent, comprenant un convertisseur à bobine dont le système de commutation d'un transistor de commutation (1) est monté en série avec une bobine (2), transistor durant la phase de conductivité duquel la bobine (2) est chargée par un courant croissant et durant la phase de blocage duquel l'énergie accumulée dans la bobine (2) passe, par une diode (4), dans le condensateur côté charge, qui est déchargé par le consommateur électrique (3), comprenant une résistance d'émetteur (11) montée en série avec le transistor de commutation (1) et parallèlement à laquelle est prévu le montage en série d'une première diode Zener (5) et le système base/émetteur d'un deuxième transistor (6) dont le collecteur est relié à la base du transistor de commutation (1) et comprenant un enroulement à réaction (7) couplé magnétiquement à la bobine (2), l'enroulement à réaction (7) étant raccordé à la base du transistor de commutation (1) d'une part par l'intermédiaire du montage en série d'une résistance (15) et d'un condensateur (17) et à la liaison entre la bobine (2) et la résistance d'émetteur (11) d'autre part, et l'émetteur du deuxième transistor (6) étant relié, par l'intermédiaire d'un condensateur (10), aussi bien à la cathode d'une diode (8) dont l'anode est raccordée à la liaison entre la bobine (2), le condensateur côté charge (9) et le consommateur électrique (3) qu'à la base du transistor de commutation (1) par l'intermédiaire d'une résistance (12) ainsi qu'à la base du deuxième transistor (6) en passant par un élément de référence correspondant à la tension de sortie.

2. Circuit selon la revendication 1, caractérisé en ce qu'une résistance (13) supplémentaire est montée parallèlement au système base/émetteur du deuxième transistor (6).

3. Circuit selon la revendication 1, caractérisé en ce que l'élément de référence correspondant à la tension de sortie est constitué par une deuxième diode Zener (16) comprenant une résistance (14) montée en série.

4. Circuit selon la revendication 1 ou 2, caractérisé en ce qu'un redresseur raccordé à un réseau de tension alternative fait office de source de tension constante.

FIG.1

FIG.2